# EUROPEAN PATENT SPECIFICATION

(11) **EP 2 688 069 B1**
(45) Date of publication and mention of the grant of the patent: **21.06.2017**
(21) Application number: 13173888.2
(22) Date of filing: 26.06.2013
(51) Int. Cl.: G11B 5/60

(54) **Devices and methods for reducing lubricant accumulation on sliders**
Vorrichtungen und Verfahren zur Minderung von Schmiermittelansammlungen auf Schiebern
Dispositifs et procédés permettant de réduire l'accumulation de lubrifiant sur des coulisseaux

(30) Priority: 19.07.2012 US 201213553072
(43) Date of publication of application: 22.01.2014
(73) Proprietor: Seagate Technology LLC, Cupertino CA 95014 (US)
(72) Inventor: Ramakrishnan, Narayanan, Bloomington, MN 55438 (US); Rajasekharan, Ajaykumar, Longmount, CO 80503 (US)
(74) Representative: Miller Sturt Kenyon

(56) References cited:
- WO-A1-98/21716
- JP-A- S5 888 872
- JP-A- 2008 021 375
- US-A1- 2002 048 120
- US-A1- 2002 075 599
- US-A1- 2010 091 405
- US-A1- 2010 226 035
- US-B1- 6 611 400
- US-B1- 8 199 437

## Description

US 2002/048120 discloses a disc drive including a base, a disc stack rotatably attached to the base, and an actuator assembly movably attached to the base. The actuator assembly also includes a load spring and a slider attached to said load spring. The slider has an air-bearing surface. The air-bearing surface includes a first rail, a second rail and a depression positioned between the first rail and the second rail of the air-bearing surface. The depression further includes a first level surface and a second level surface. The first level surface of the slider is at a different distance from a surface of the first rail of the slider than the second level surface of the slider. The air-bearing surface may also include a divider located between the first level surface of the slider and the second level surface of the slider.

US 2010/091405 discloses a slider for use with disk drive data storage devices including a topography that defines features of the slider. The features facilitate in controlling fly-height and/or inhibiting lubricant accumulation on the slider. For example, a trailing air bearing surface of the slider may be formed around a multi-stepped channel that adjusts the fly-height. Further, a shallow shelf behind an air bearing surface and/or curved edges of the features to alter stagnation may contribute to at least inhibiting lubricant collection on the slider.

US 8,199,437 discloses a head including an air bearing surface having a trailing pad adjacent a read transducer and lying in a primary plane. The air bearing surface includes a sub-ambient pressure cavity recessed from the primary plane by at least 500 nm. At least one leading pad is disposed upstream of the sub-ambient pressure cavity and has a leading pad surface in the primary plane. A moat is disposed upstream of the leading pad and is recessed from the primary plane by at least 500 nm. The moat continuously spans the entire width of the slider. A particle fence in the primary plane is disposed immediately upstream of the moat and adjacent the leading face.

WO 98/21716 discloses a slider supporting a transducer proximate to a lubricated recording medium. The slider includes a slider body, a raised rail formed on the slider body and a fluid flow pattern across the slider body which has at least one stagnant flow region. A surface discontinuity is formed on the slider body and is positioned within the stagnant flow region to inhibit lubricant collected within the stagnant flow region from migrating to the raised rail.

### Summary

The present invention is generally directed to a device for reducing lubricant accumulation on sliders.

According to a first aspect of the present invention, there is provided a slider as defined in claim 1.

Preferably, the slider further comprises transition features at a downstream side of the cavity.

It is further preferred that the slider further comprises turbulence-inducing features positioned on the transition features at the downstream side of the cavity.

Preferably, the turbulence-inducing features have a surface roughness greater than the rest of the bottom side of the slider.

It is further preferred that the turbulence-inducing features are located on the cavity floor and are textured.

### Brief Description of the Drawings

FIG. 1 provides a side view of a portion of a slider profile.
FIG. 2 provides a bottom view of the slider of FIG. 1.
FIG. 3 provides a side view of a profile of a slider, which is provided as background art only.
FIG. 4 provides a side view of a profile of a slider, which is provided as background art only.
FIG. 5 provides a side view of a profile of a slider, which is provided as background art only.
FIG. 6 provides a side view of a profile of a slider, which is provided as background art only.
FIG. 7 provides a side view of a profile of a slider, which is provided as background art only.
FIG. 8 provides a side view of a profile of a slider, which is provided as background art only.
FIG. 9A provides a side view of a profile of a slider, according to the present invention.
FIG. 9B provides a side view of a profile of a slider, which is provided as background art only.

### Detailed Description

The present disclosure relates to devices, systems, and methods for reducing lubricant accumulation on sliders. Lubricants are used on rotatable storage media and sliders within disc drives to protect storage media and sliders from physical and chemical damage. Lubricants used for storage media can include bonded and non-bonded portions. The non-bonded (or mobile) portion of the lubricant replenishes regions on the media where the lubricant may have become depleted. However, the mobile portion also can migrate from the media to the slider and then accumulate at regions on the slider.

One mechanism of media-to-slider lubricant transfer and accumulation is a result of suction cavities in slider designs utilizing sub-ambient pressure. The presence of a sub-ambient pressure cavity can cause a backflow in an upstream direction towards the cavity because pressure at the trailing edge of the slider is at ambient-by definition, a higher pressure. The backflow can combine with main flow to form regions of flow stagnation, that is, where flow is at or near zero. Transferred lubricant tends to accumulate at these flow stagnation points. As a result, accumulated lubricant can interfere with the slider's flying characteristics, causing read/write errors and/or reduced data throughput, among other things.

Some attempts to mitigate lubricant accumulation have utilized trenches at stagnation points that "trap" lubricant and limit lubricant from flowing back and forth through the region and interfering with read/write elements. However, these attempts do not attack the underlying problem: flow stagnation.

Certain embodiments of the present disclosure are accordingly directed to devices and methods for reducing flow stagnation on sliders.

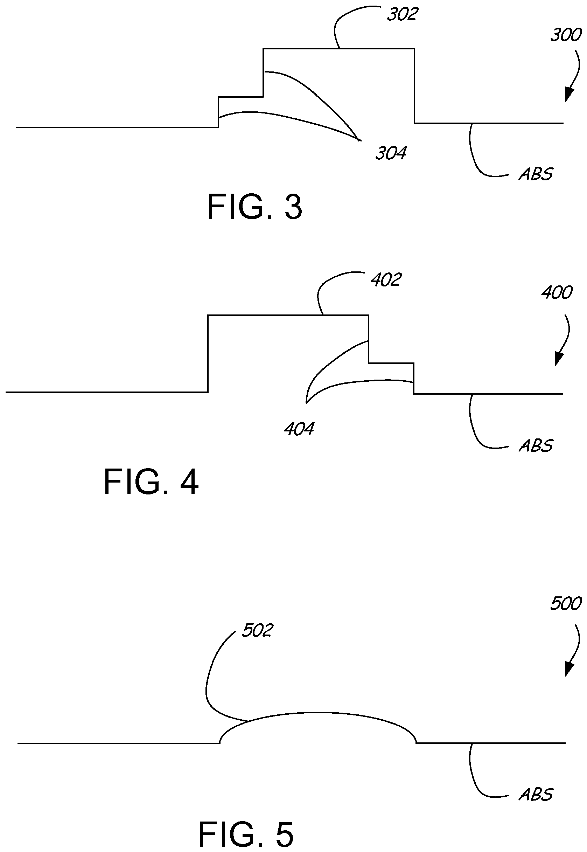

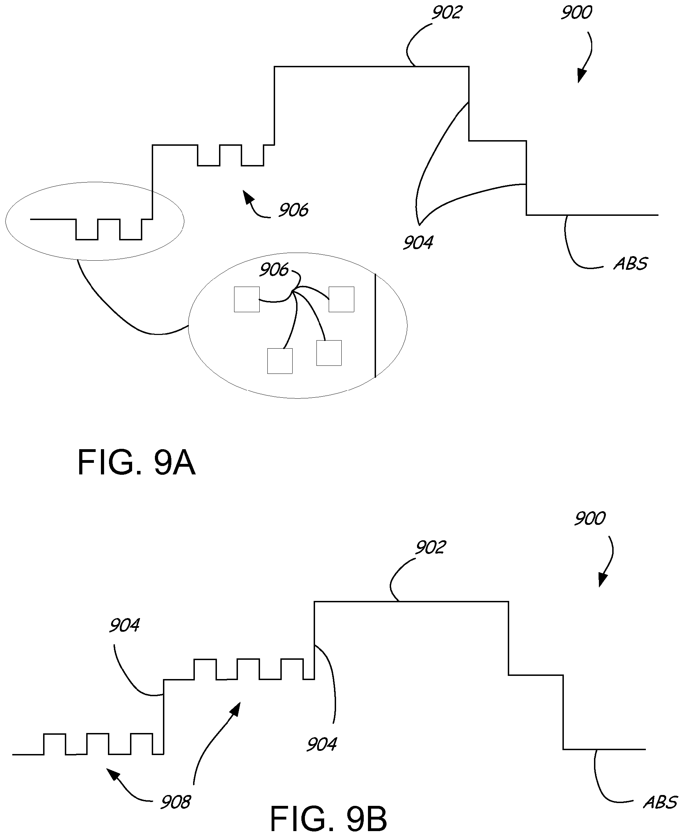

The examples described below in relation to figures 3-8 and 9B are provided as background art. The embodiment shown in Figure 9A forms part of the claimed invention.

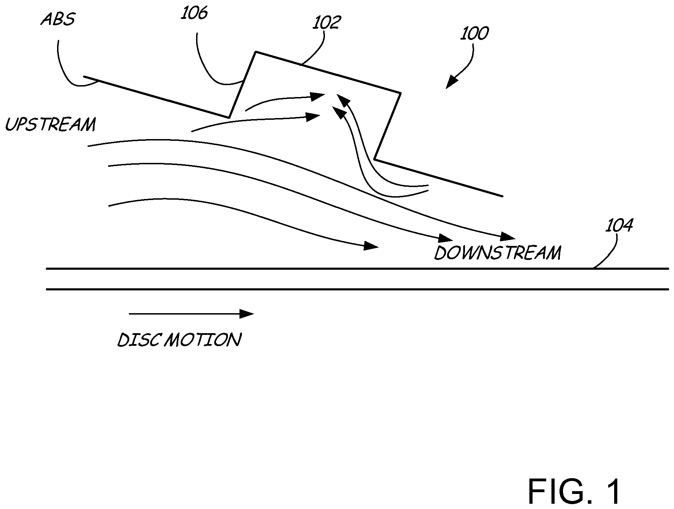

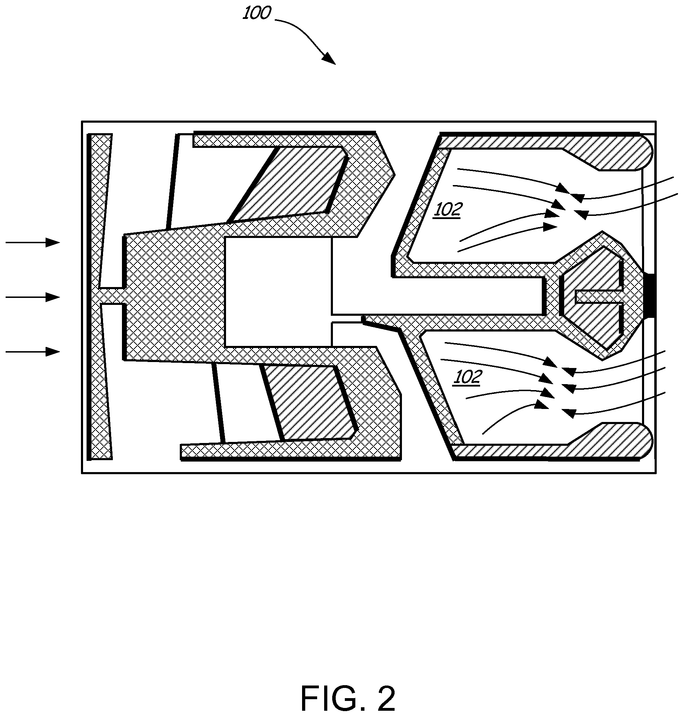

FIG. 1 shows a profile of a portion of an air-bearing surface (ABS) of a slider 100 having a sub-ambient cavity 102. FIG. 2 shows a bottom side of the slider 100 and cavity 102. As the slider 100 flies above a storage medium 104, a main flow of air flows over the ABS from a leading edge (upstream) to a trailing edge (downstream). At the same time, some air flows in an opposite direction of the main flow, from the trailing edge towards the leading edge-the backflow. As the mainflow traverses the ABS and reaches the cavity 102 (see FIG. 2), the airflow expands or diffuses into the cavity 102 across an upstream vertical wall 106 of the cavity 102. This expansion can result in sudden and rapid deceleration of the mainflow and possibly separation of a boundary layer along walls of the cavity 102. The deceleration and separation can be exacerbated in the presence of the backflow across the trailing edge-a condition shown in both FIGS. 1 and 2. As a result, the possibility of flow stagnation is increased, which also increases the possibility of lubricant accumulation in portions of the sub-ambient cavity.

FIG. 3 shows a profile of a portion of an air-bearing surface (ABS) of a slider 300. The slider 300 has a sub-ambient cavity 302 with transition features 304 at an upstream side of the cavity 302. The transition features 304 provide a gradual diffusion of main air flow along the slider 300. As such, the transition features 304 may reduce boundary layer separation at slider walls and may reduce a loss of main flow momentum typically associated with previous cavity designs. Reduced separation and momentum loss in the cavity 302 decreases the chance of stagnation zones forming in the cavity 302. As shown in FIG. 3 and following figures, transition features can have an array of designs, such as steps, slopes, and curves, among other geometries.

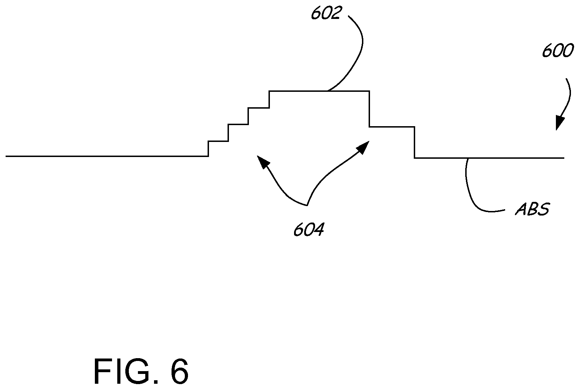

FIGS. 4-6 provide embodiments of slider designs using similar concepts described with respect to FIG. 3. FIG. 4 shows a profile of a portion of an ABS of a slider 400 having a sub-ambient cavity 402. The cavity 402 has transitions features at a downstream side of the cavity 402. Here, the transition features 404 provide a gradual diffusion of backflow, thereby reducing the effect of backflow in the cavity 402. The transition features 404 are shown as steps, but can be other geometries. FIG. 5 shows a profile of a portion of an ABS of a slider 500 having a sub-ambient cavity 502 that is curved to provide gradual diffusion of main- and backflow. FIG. 6 shows a profile of a portion of an ABS of a slider 600 having a sub-ambient cavity 602. The cavity 602 has transition features 604 at upstream and downstream sides-each side having features 604 with differing graduations of steps. Transition features can include any number or possibilities of geometries, although not all the possibilities are specifically shown in the figures.

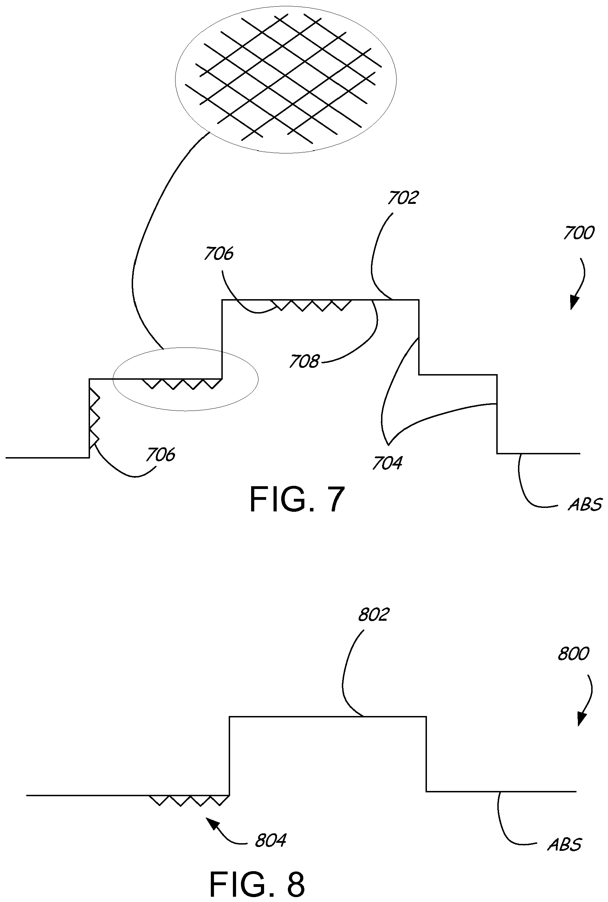

FIG. 7 shows a profile of a portion of an ABS of a slider 700 having a sub-ambient cavity 702 with transition features 704. The transition features 704 have turbulence- or vortex-inducing features 706. The turbulence-inducing features 706 can be textured or roughened portions of the transition features 704. Textured features could include alternating grooves and ridges, for example. Roughened features could include portions of a surface having a higher surface roughness than the surrounding portions of the surface. The turbulence-inducing features 706 can be positioned at multiple locations within the cavity 702, for example, on the transition features 704 or on a cavity floor 708. As air flows over the turbulence-inducing features 706, the boundary layer of the flow becomes turbulent, which facilitates large-scale momentum transfer from high-shear layers close to a rotating disc to layers close to walls of the cavity 702. This momentum transfer permits the momentum of the main flow to prevail over a larger portion of the cavity 702 and therefore reduce the possibility of flow stagnation zones within the cavity 702. FIG. 8 shows a profile of a portion of an ABS of a slider 800 having a sub-ambient cavity 802. Turbulence-inducing features 804 are located directly upstream of the cavity 802 to induce turbulence of main flow as it enters the cavity 802.

FIGS. 9A and 9B show a profile of portion of an ABS of a slider 900 having a sub-ambient cavity 902 with transition features 904. Turbulence-inducing features are located directly upstream of the cavity and also located on the transition features 904. As shown in FIG. 9A, the turbulence-inducing features of the claimed invention are protuberances 906. As shown in FIG. 9B, other turbulence-inducing features provided as background art are micro-cavities 908. The turbulence-inducing features can be formed by milling or etching, among other methods used for slider manufacturing processes. The characteristics, geometries, and locations of the turbulence-inducing features can be optimized for different slider designs. According to the present invention, as shown in FIG. 9A, the turbulence-inducing features are arranged in a randomized distribution to enhance turbulent mixing of the main flow within the cavity.

It is to be understood that even though numerous characteristics and advantages of various embodiments of the present invention have been set forth in the foregoing description, together with details of the structure and function of various embodiments of the invention, this detailed description is illustrative only, and changes may be made in detail, especially in matters of structure and arrangements of parts within the principles of the present invention to the full extent indicated by the broad general meaning of the terms in which the appended claims are expressed.

## Claims

1. A slider (900) comprising:
an air bearing surface (ABS) having a cavity (902), the cavity including transition features (704, 904) at an upstream side of the cavity to mitigate air flow expansion along the cavity; and
turbulence-inducing features (906) positioned on the transition features at the upstream side of the cavity and positioned immediately upstream of the cavity; wherein:
the cavity is a sub-ambient cavity, and
the transition features (904) are steps between the cavity floor and the air bearing surface (ABS), **characterized in that**
the turbulence inducing features are protuberances (906) arranged in a randomized distribution to enhance turbulent mixing of the main flow within the cavity.

2. The slider of claim 1, further comprising transition features at a downstream side of the cavity.

3. The slider of claim 2, further comprising turbulence-inducing features positioned on the transition features at the downstream side of the cavity.

4. The slider of any one of the preceding claims, wherein the turbulence-inducing features have a surface roughness greater than the rest of a bottom side of the slider.

5. The slider of any one of the preceding claims, wherein the turbulence-inducing features are located on the cavity floor and are textured.

## Patentansprüche

1. Schieber (900), umfassend:
eine Luftkissenfläche (ABS) mit einer Vertiefung (902), wobei die Vertiefung enthält
Übergangsmerkmale (704, 904) an einer stromaufwärts liegenden Seite der Vertiefung, um eine Luftstromausbreitung entlang der Vertiefung abzuschwächen; und
Turbulenz-verursachende Merkmale (906), die auf den Übergangsmerkmalen an der stromaufwärts liegenden Seite der Vertiefung positioniert sind und unmittelbar stromaufwärts der Vertiefung positioniert sind; wobei:
die Vertiefung eine Vertiefung unter Umgebungsniveau ist, und
die Übergangsmerkmale (904) Stufen zwischen dem Vertiefungsboden und der Luftkissenfläche (ABS) sind, **dadurch gekennzeichnet, dass**
die Turbulenz-verursachenden Merkmale Vorsprünge (906) sind, die in einer zufälligen Verteilung angeordnet sind, um eine turbulente Mischung des Hauptstroms innerhalb der Vertiefung zu steigern.

2. Schieber nach Anspruch 1, des Weiteren umfassend Übergangsmerkmale an einer stromabwärts liegenden Seite der Vertiefung.

3. Schieber nach Anspruch 2, des Weiteren umfassend Turbulenz-verursachende Merkmale, die auf den Übergangsmerkmalen an der stromabwärts liegenden Seite der Vertiefung positioniert sind.

4. Schieber nach einem der vorangehenden Ansprüche, wobei die Turbulenz-verursachenden Merkmale eine größere Flächenrauheit als der Rest einer Bodenseite des Schiebers haben.

5. Schieber nach einem der vorangehenden Ansprüche, wobei die Turbulenz-verursachenden Merkmale auf dem Vertiefungsboden gelegen sind und texturiert sind.

## Revendications

1. Coulisseau (900) comprenant :
une surface à coussinet d'air (ABS) ayant une cavité (902), la cavité incluant
des fonctionnalités de transition (704, 904) au niveau d'un côté en amont de la cavité afin d'atténuer l'expansion de flux d'air le long de la cavité ; et
des fonctionnalités induisant une turbulence (906) positionnées sur les fonctionnalités de transition au niveau du côté en amont de la cavité et positionnées immédiatement en amont de la cavité ; dans lequel :
la cavité est une cavité sous-ambiente, et
les fonctionnalités de transition (904) sont des gradins entre le fond de la cavité et la surface à coussinet d'air (ABS), **caractérisé en ce que**
les fonctionnalités induisant une turbulence sont des protubérances (906) disposées dans une distribution randomisée afin d'accroitre le mélange turbulent du flux principal à l'intérieur de la cavité.

2. Coulisseau selon la revendication 1, comprenant en outre des fonctionnalités de transition au niveau d'un côté en aval de la cavité.

3. Coulisseau selon la revendication 2, comprenant en outre des fonctionnalités induisant une turbulence positionnées sur les fonctionnalités de transition au niveau du côté en aval de la cavité.

4. Coulisseau selon une quelconque des revendications précédentes, dans lequel les fonctionnalités induisant une turbulence ont une rugosité de surface supérieure au reste d'un côté d fond du coulisseau.

5. Coulisseau selon une quelconque des revendications précédentes, dans lequel les fonctionnalités induisant une turbulence sont situées sur le fond de la cavité et sont texturées.
